# FASCICULE DE BREVET EUROPEEN

(11) **EP 4 059 777 B1**
(45) Date de publication et mention de la délivrance du brevet: **07.06.2023**
(21) Numéro de dépôt: 21217895.8
(22) Date de dépôt: 28.12.2021
(51) Int. Cl.: B60R 9/052

(54) **KIT D'ASSEMBLAGE POUR GALERIE DE TOIT DE VEHICULE ET PROCEDE ASSOCIE**
MONTAGEKIT FÜR FAHRZEUGDACHTRÄGER UND ENTSPRECHENDES VERFAHREN
ASSEMBLY KIT FOR GALLERY FOR THE ROOF OF A VEHICLE AND ASSOCIATED METHOD

(30) Priorité: 15.03.2021 FR 2102524
(43) Date de publication de la demande: 21.09.2022
(73) Titulaire: Joubert Productions, 63600 Ambert (FR)
(72) Inventeur: KAELIN, Régis, 63600 SAINT FERREOL DES COTES (FR); JOURDAN, Xavier Pierre, 38570 LE CHEYLAS (FR)
(74) Mandataire: Cabinet Laurent & Charras

(56) Documents cités:
- EP-A2- 1 205 357
- WO-A1-2009/126286
- WO-A1-2017/075123

## Description

### DOMAINE TECHNIQUE

La présente invention concerne le domaine des galeries de toit pour véhicules et notamment pour véhicules utilitaires.

En particulier, l'invention porte sur un kit d'assemblage pour galerie de toit de véhicule et sur le procédé de montage d'un tel kit.

L'invention permet avantageusement à une personne de pouvoir monter seule la galerie offrant les mêmes caractéristiques de robustesse et de rigidité qu'une galerie traditionnelle soudée sur le toit d'un véhicule, ladite galerie étant plus économique à stocker et à transporter.

### ART ANTERIEUR

Les véhicules utilitaires sont des véhicules très versatiles, adaptés pour des professionnels exerçant des activités diverses. En particulier, les utilitaires présentent une grande capacité de stockage, ce qui permet de les utiliser pour le transport de matériel.

A cet effet, le toit du véhicule représente un espace de stockage supplémentaire, qui peut être fonctionnalisé afin d'augmenter la capacité de stockage totale de l'utilitaire. Afin de faciliter le stockage de matériel sur le toit du véhicule, une galerie de toit peut être installée.

Les galeries de toit sont généralement formées d'un ensemble de barres disposées transversalement sur tout ou partie de la longueur du toit du véhicule. Les barres transversales sont encadrées par des ridelles faisant saillie des barres transversales, formant ainsi des rebords latéraux.

En d'autres termes, les barres transversales forment un plancher permettant de supporter le chargement et d'empêcher son contact direct avec le toit du véhicule, tandis que les ridelles permettent un maintien latéral efficace du chargement. En outre, les ridelles peuvent former un point d'arrimage pour le chargement.

De manière classique, les galeries de toit existantes sont monobloc. Ainsi, les barres transversales sont généralement directement fixées ou soudées aux ridelles. Une galerie de toit est donc un accessoire encombrant, difficile à transporter et à stocker. En particulier, il est quasiment impossible pour une personne seule de transporter la galerie et surtout de la monter sur le toit de son véhicule, en raison de ses dimensions, voire de son poids.

Afin de résoudre ce problème, il a été proposé, par exemple dans le document WO2017/075123 un système d'assemblage pour de telles galeries de toit comprenant des barres transversales montées sur des ridelles. Ce faisant, ce système confère une certaine modularité à la galerie de toit. Cependant, le mode d'assemblage des barres transversales et des ridelles est relativement complexe à mettre en oeuvre dans la mesure où la stabilité des éléments constitutifs lors du montage est défaillante.

Le problème technique que se propose de résoudre l'invention est donc de mettre au point une galerie de toit modulaire, plus facile à stocker, transporter et installer que les galeries existantes, notamment pour une personne seule.

### DESCRIPTION DE L'INVENTION

Afin de résoudre ce problème, l'invention propose un kit d'assemblage pour galerie de toit de véhicule comprenant :
- des profilés transversaux munis de moyens d'appui ou de connexion de la galerie au véhicule, les profilés transversaux étant destinés à être montés sur le toit selon une direction transverse à un axe longitudinal du véhicule, et
- des ridelles, destinées à être montées aux extrémités des profilés transversaux et orientées perpendiculairement par rapport aux profilés transversaux, les ridelles comportant un logement de réception des extrémités des profilés transversaux.

Les profilés transversaux sont munis de moyens de verrouillage aptes à assurer la fixation des ridelles au niveau des extrémités des profilés transversaux.

Selon l'invention :
- les profilés transversaux sont munis d'une butée en saillie supérieure positionnée en retrait par rapport à chacune de leurs deux extrémités ;
- le logement de réception dont sont munies les ridelles, comporte un ergot en saillie orientée en direction de la base inférieure dudit logement de réception, ledit ergot étant apte à coopérer avec la butée en saillie supérieure des profilés transversaux.

L'agencement de la galerie de toit sous forme de kit permet de gagner en modularité et en adaptabilité. En effet, une galerie de toit est plus facilement stockable sous forme de kit, puisque les différents éléments peuvent être démontés et arrangés de manière compacte et unitaire, de sorte à gagner le plus de place possible en vue d'être stockés. Il est même envisageable de pouvoir stocker et transporter le kit directement dans l'utilitaire en cas de besoin, ce qui n'était pas possible avec les galeries monobloc de l'art antérieur.

En outre, le kit selon l'invention permet à une personne seule de pouvoir transporter la galerie de toit. En effet, l'utilisateur n'a pas besoin de supporter la galerie dans son entièreté, il peut transporter le kit pièce par pièce, à son rythme et selon sa force.

Selon une caractéristique de l'invention, la fixation des ridelles sur les profilés transversaux peut être réversible. Ce faisant, la galerie peut être montée et démontée à loisir. En outre, les moyens de verrouillage peuvent être de type rapide, c'est-à-dire, ne nécessitant qu'une seule action du monteur, ainsi qu'il sera au demeurant décrit ultérieurement.

De plus, le kit est prévu pour que son montage et son démontage puisse également être réalisé par une personne seule. Aucune pièce ne nécessite d'être fixée simultanément de part et d'autre de l'utilitaire, ce qui nécessiterait que deux personnes soient présentes pour coordonner la fixation.

Par ailleurs, puisque le montage et/ou les soudures classiquement réalisées lors de la production des galeries monobloc de l'art antérieure ne sont pas exécutées dans le cas d'un kit, la production d'une galerie sous forme de kit représente une économie non négligeable.

La butée des profilés transversaux permet de former une zone d'appui permettant le guidage des ridelles lors de leur montage, outre l'alignement des profilés transversaux. On dispose ainsi d'une auto-stabilité lors du montage de la galerie, facilitant grandement ladite opération.

Ainsi, l'association de l'ergot et de la butée constitue un point de repère pour l'utilisateur. Celui-ci sait en effet où positionner la ridelle pour la monter sur les profilés transversaux. La coopération entre la ridelle et les ergots permet de bien aligner les profilés transversaux.

En outre, le positionnement de l'ergot contre la butée permet de guider le basculement de la ridelle lors de son montage.

De plus, l'ergot permet de bloquer les profilés transversaux dans le logement des ridelles. En effet, la présence de l'ergot prévient dans une certaine mesure l'arrachement de la ridelle. Seul un mouvement de basculement permet de déloger la ridelle.

Afin de fixer la ridelle sur les profilés transversaux, la base du logement de réception dont sont munies les ridelles définit un évidement apte à coopérer avec les moyens de verrouillage des profilés transversaux.

Ainsi, l'évidement permet d'accueillir au moins en partie les moyens de verrouillage. La forme de l'évidement permet en outre le verrouillage de la ridelle sur les profilés transversaux.

En pratique, les moyens de verrouillage des profilés transversaux sont constitués d'une lame rigide longiligne, susceptible d'être actionnée selon un quart de tour par une vis au moyen d'un outil adapté, du type tournevis ou visseuse, après l'avoir préalablement légèrement enfoncée pour la libérer.

A titre illustratif, la lame longiligne présente une fonction similaire à celle d'un écrou : elle coopère avec la vis, par exemple via un trou fileté ménagé dans la lame longiligne. Ainsi, la mise en rotation de la vis, par exemple par un outil tel qu'un tournevis ou une visseuse permet également la rotation de la lame longiligne si tant est que celle-ci n'est pas bloquée en rotation.

De ce fait, la rotation d'un quart de tour de la vis entraine la rotation d'un quart de tour de la lame longiligne. Celle-ci se trouve alors bloquée en translation verticale par la forme de l'évidement ménagé dans la ridelle.

Selon une autre caractéristique de l'invention, la vis est accessible par la partie supérieure du profilé transversal, muni à cet effet d'une ouverture traversante.

Ainsi, l'accès aux moyens de réglage est facilité. L'utilisateur peut en effet insérer un outil de réglage tel qu'un tournevis depuis le dessus du profilé pour fixer la ridelle.

Dans un mode de réalisation préférentiel, des bouchons sont rapportés aux extrémités des profilés transversaux.

Les bouchons sont des pièces d'usure facilement remplaçables. Ils peuvent également être formés dans une matière différente de celle des profilés, typiquement dans un matériau présentant une élasticité et une déformation plus importante pour faciliter l'insertion dans le logement de réception des ridelles, et notamment en matière plastique, typiquement en polyamide, polyacetal, polypropylène, etc.

En outre, le logement de réception des ridelles est de préférence adapté à la forme des bouchons. La complémentarité de forme des bouchons et des ridelles permet de faciliter le montage des ridelles sur les profilés transversaux.

Dans un mode de réalisation préférentiel, le kit comprend en outre un déflecteur positionné à l'avant de la galerie, ledit déflecteur étant formé d'un profilé fixé en ses extrémités aux ridelles.

Les déflecteurs sont des profilés présentant une forme aérodynamique permettant de limiter les sifflements dus au vent et de réduire la consommation supplémentaire de carburant liée à la présence d'une galerie de toit et d'un chargement.

L'invention porte également sur un procédé de montage d'une galerie de toit de véhicule telle que décrite précédemment. Ce procédé consiste essentiellement :
- à positionner des profilés transversaux sur le toit du véhicule,
- à positionner des ridelles contre la face supérieure des profilés transversaux,
- à basculer les ridelles autour des extrémités des profilés transversaux de sorte à permettre l'insertion des extrémités des profilés transversaux dans le logement de réception des ridelles, et
- à fixer réversiblement ou non les ridelles sur lesdits profilés par les moyens de verrouillage des profilés transversaux.

Un tel procédé de montage est simple à mettre en oeuvre, notamment pour une personne seule puisqu'il réside sur le positionnement et le basculement de ridelles, mouvement intuitif qui nécessite peu de force.

### BREVE DESCRIPTION DES FIGURES

La manière de réaliser l'invention, ainsi que les avantages qui en découlent, ressortiront bien de la description des modes de réalisation qui suivent, à l'appui des figures annexées dans lesquelles :
La figure 1 est une vue schématique en perspective du kit d'assemblage pour galerie de toit de véhicule selon un mode de réalisation de l'invention,
La figure 2 est une vue schématique en perspective éclatée d'un profilé transversal du kit de la figure 1,
La figure 3 est une vue schématique en perspective d'un bouchon monté sur une extrémité d'un profilé transversal du kit de la figure 1,
La figure 4 est une vue schématique en coupe longitudinale de profil du bouchon monté sur une extrémité d'un profilé transversal de la figure 3,
La figure 5 est une vue schématique en perspective d'une ridelle du kit de la figure 1,
La figure 6 est une vue schématique en perspective éclatée de la ridelle de la figure 5,
La figure 7 est une vue schématique de profil de la ridelle de la figure 5, munie d'un bouchon terminal,
La figure 8 est une vue schématique en perspective éclatée d'un profilé de plancher du kit de la figure 1,
La figure 9 est une vue schématique en perspective d'un bouchon monté sur une extrémité d'un profilé de plancher du kit de la figure 1,
La figure 10 est une vue schématique en coupe longitudinale de profil du bouchon monté sur une extrémité d'un profilé de plancher de la figure 9,
La figure 11 est un organigramme présentant les différentes étapes du procédé de montage d'une galerie de toit de véhicule selon un mode de réalisation de l'invention,
La figure 12 est une représentation de la troisième étape du procédé de la figure 11,
La figure 13 est une représentation de la quatrième étape du procédé de la figure 11,
La figure 14 est une représentation de la cinquième étape du procédé de la figure 11,
La figure 15 est une représentation de la sixième étape du procédé de la figure 11,
La figure 16 est une représentation de la galerie de toit à la sixième étape du procédé de la figure 11, et
La figure 17 est une représentation de la septième étape du procédé de la figure 11.

### DESCRIPTION DES MODES DE REALISATION

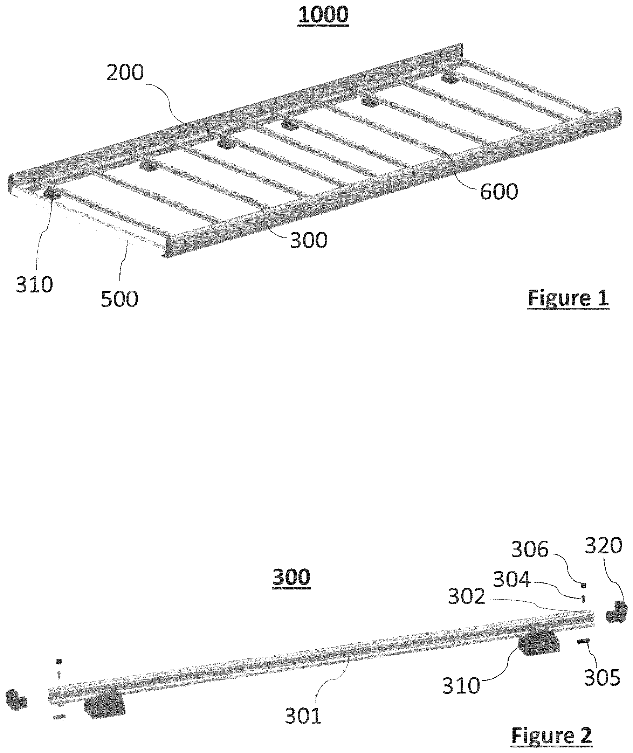

Tel qu'illustré sur la figure 1, le kit **1000** d'assemblage pour galerie de toit de l'invention comprend des profilés transversaux **300,** des ridelles **200** et éventuellement des profilés de plancher **600** et/ ou un déflecteur **500.**

Les profilés transversaux **300** sont régulièrement espacés les uns des autres d'une distance comprise entre 30 et 70 cm, voire plus. Les profilés de plancher **600** sont interposés entre deux profilés transversaux **300,** de préférence à équidistance de deux profilés transversaux **300.** Les profilés de plancher **600** sont donc préférablement à une distance comprise entre 15 et 75 cm, de deux profilés transversaux **300,** fonction du poids de la charge qu'est destinée à recevoir la galerie.

Tel qu'illustré sur la figure 2, un profilé transversal **300** comprend un corps **301** longiligne sensiblement parallélépipédique d'une longueur comprise entre 1 et 2,5 mètres. Le profilé transversal **300,** est de préférence réalisé en un matériau métallique résistant à la déformation et à la corrosion, typiquement en acier ou en aluminium, et est par exemple issu de filière. Le corps **301** est préférablement creux, pour conférer davantage de légèreté à la structure. Le corps **301** est destiné à être fixé sur le toit d'un véhicule par le biais de pieds d'appui **310,** prenant appui sur le toit dudit véhicule. Alternativement ces pieds d'appui pourraient être remplacés par des éléments venant prendre appui sur les gouttières latérales, dont est traditionnellement muni le toit des véhicules.

Les pieds d'appui **310** sont solidaires du corps **301** et préférablement au nombre de deux, positionnés de part et d'autre du corps **301.** Ils sont destinés à être fixés sur des logements, généralement de taille et de forme standardisées, prévus à cet effet sur le toit du véhicule, ou simplement à reposer sur le toit dudit véhicule.

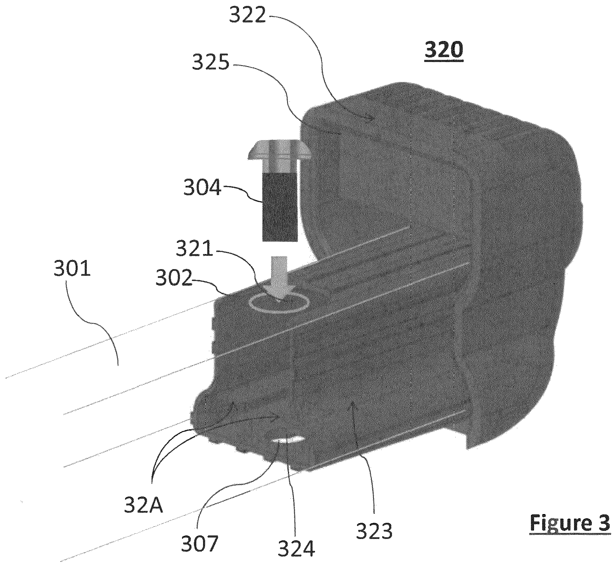

De préférence, le profilé transversal **300** comporte des bouchons **320** en ses extrémités. Tel qu'illustré sur la figure 3, les bouchons **320** sont typiquement réalisés en une matière plastique ou caoutchouteuse par moulage. Les bouchons **320** comportent un corps **323** creux destiné à être inséré en force aux extrémités du profilé transversal **300.** Le corps **323** est surmonté d'une tête **322** plus large que le corps **323.** Typiquement, la tête **322** fait saillie du corps **323** au niveau de la face supérieure du profilé transversal **300,** sur une hauteur comprise entre 5 et 30 millimètres de sorte à former une butée **325** au niveau de sa face interne. La face externe des bouchons **320,** destinée à venir au contact des ridelles **200,** présente une géométrie sensiblement arrondie pour facilite le basculement de la ridelle **200.** La tête **322** des bouchons **320** présente une épaisseur comprise entre 1 et 5 cm.

Les bouchons **320** peuvent être fixés sur le corps **301** du profilé transversal **300** par des moyens de fixation incluant une vis **304** et une lame longiligne **305** remplissant la fonction d'écrou. A cet effet, la lame longiligne **305** comporte un alésage taraudé en son centre. De préférence, la lame longiligne **305** est de forme parallélépipédique avec une longueur supérieure à sa largeur, et avantageusement munie de coins arrondis, afin de faciliter sa rotation.

Pour accueillir la vis **304,** le corps **301** du profilé transversal **300** peut comporter une ouverture traversante ou en variante, si le corps **301** du profilé transversal **300** est creux, une première ouverture **302** débouchant sur la face supérieure du profilé transversal **300** alignée avec une seconde ouverture **307** débouchant sur la face inférieure du profilé transversal **300,** de sorte à permettre le passage de la vis **304** à travers le profilé transversal **300** depuis sa face supérieure.

En outre, le corps **323** des bouchons **320** comporte également une ouverture traversante **321** permettant le passage de la vis **304.** En variante, si le corps **323** du bouchon **320** est creux, la face supérieure du corps **323** peut comporter une ouverture traversante ou un évidement **321** aligné avec une seconde ouverture **324** débouchant sur la face inférieure du bouchon **320.**

Ainsi, lorsque le bouchon **320** est inséré dans le profilé transversal **300,** les ouvertures **302, 307, 321, 324** sont alignées pour permettre le passage de la vis **304** depuis la face supérieure du profilé transversal **300** jusqu'à sa face inférieure.

De préférence, le diamètre des ouvertures et/ou évidement **302, 307, 321, 324** est dimensionné de sorte à permettre à la tête de la vis **304** de pénétrer dans le corps **301** du profilé transversal **300** tout en demeurant retenue par l'ouverture **307** de la face inférieure du profilé **300** ainsi que le passage d'un outil tel qu'un tournevis pour visser la vis **304** à travers les différents éléments.

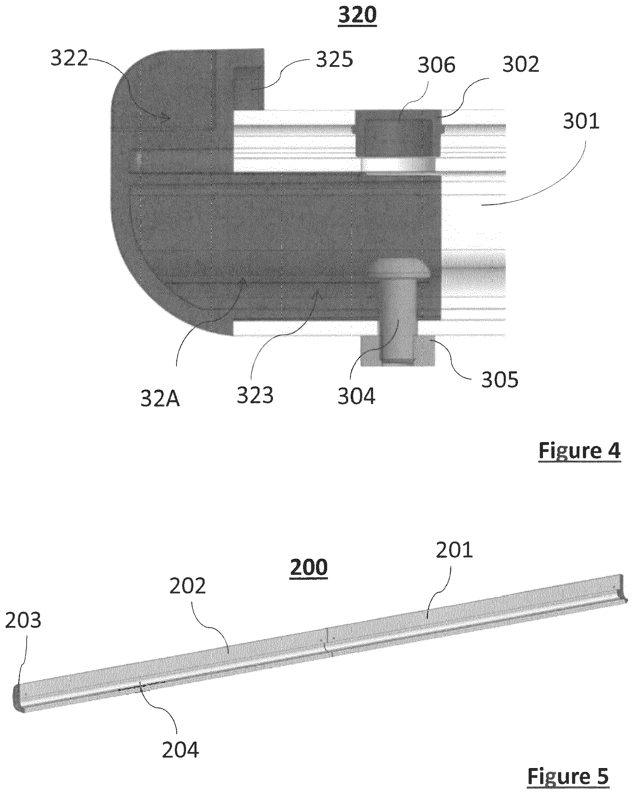

En pratique, lors du montage, la lame longiligne **305** est positionnée au niveau de l'ouverture **307** de la face inférieure du profilé longitudinal **300,** tandis que la vis **304** est insérée depuis la face supérieure du profilé longitudinal **300** à travers le corps **301** du profilé **300.** La vis **304** débouche ainsi à travers l'ouverture **307** et peut être vissée dans l'ouverture filetée de la lame longiligne **305.** Par ailleurs, le corps **323** du bouchon **320** comprend deux lames déformables **32A** s'étendant en direction de l'intérieur dudit corps, et destinées à recevoir la tête de vis **304,** de telle sorte à maintenir la lame longiligne **305** en pression contre la face inférieure du corps **323,** ainsi qu'on peut bien l'observer sur la figure 4. Ces lames latérales **32A** sont déformables, afin de permettre l'abaissement de de la vis **304** et corollairement de la lame longiligne **305** sous l'action de l'outil (tournevis ou visseuse) et ensuite, la rotation de ladite lame longiligne **305** d'un quart de tour, afin d'aboutir au verrouillage au sein de l'évidement **207** défini au voisinage de la base de la ridelle **200,** ainsi qu'il sera décrit ultérieurement. En d'autres termes, par défaut, c'est-à-dire en l'absence de contrainte extérieure, il existe un couple de contrainte verticale né de l'action de la vis **304** prenant appui sur les lames latérales déformables **32A** sur la lame longiligne **305** prenant appui contre la face inférieure du corps du bouchon. Le caractère déformable des lames latérales **32A** résulte de leur matériau constitutif, typiquement en matière plastique (polyamide, polyacetal, polypropylène, etc.) et de leur géométrie.

En variante, le corps **301** et les bouchons **320** peuvent être monobloc, c'est-à-dire que le corps **301** des profilés transversaux **300** peut être moulé de sorte à présenter en ses extrémités une forme similaire à celle des bouchons **320** et notamment une butée **325** en saillie.

Tel qu'illustré sur la figure 4, l'ouverture **302** ménagée dans le profilé transversal **300** peut être bouchée par un cache **306,** afin d'éviter que l'eau ne pénètre dans le profilé **300,** causant ainsi un alourdissement de la structure.

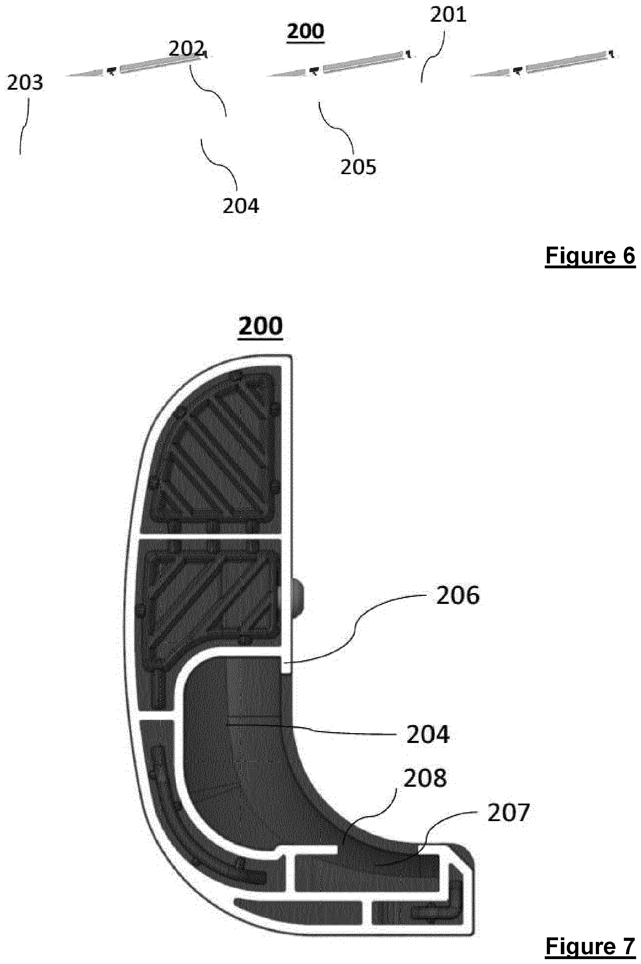

Tel qu'illustré sur les figures 5 et 6, une ridelle **200** est formée d'un corps longiligne d'une longueur comprise entre 1 et 3 mètres. La ridelle **200,** est de préférence réalisée en un matériau métallique résistant à la déformation et à la corrosion, typiquement en acier ou en aluminium, et là encore, typiquement issue de filière. Le corps est de préférablement creux, pour conférer plus de légèreté à la structure. La ridelle **200** est par exemple formée de deux sous-parties **201** et **202** solidarisées réversiblement l'une à l'autre au moyen d'une pièce de jonction **205** apte à pénétrer en force dans la portion creuse des extrémités des deux sous-parties **201** et **202** à joindre. Les deux sous-parties **201** et **202** sont par exemple maintenues sur la pièce de jonction **205** grâce à des vis de fixation, non représentées, traversant un filetage ménagé dans la pièce de jonction **205** et dans la ridelle **200.**

Les extrémités libres des deux sous-parties **201** et **202** de la ridelle **200** peuvent être fermées par des caches **203** aptes à pénétrer en force dans la portion creuse des extrémités des deux sous-parties **201** et **202.** Ces caches **203** permettent d'éviter que de l'eau ne pénètre dans les ridelles **200,** alourdissant ainsi la structure. Ils permettent en outre d'éviter le sifflement lors du roulage, et en outre, de cacher les arrêtes saillantes ou coupantes. Les caches **203** sont par exemple maintenus sur la ridelle **200** grâce à des vis de fixation, non représentées, traversant un filetage ménagé dans les caches **203** et dans la ridelle **200.**

La ridelle présente également un logement de réception **204** s'étendant selon sensiblement toute sa longueur, a minima au niveau des zones de réception des profilés transversaux **300** ou des profilés de plancher **600.**

A titre d'exemple, tel qu'illustré sur la figure 7, la ridelle **200** présente une forme de « L » dont la partie verticale présente une hauteur comprise entre 10 et 20 cm et la base horizontale présente une longueur comprise entre 5 et 15 cm. La partie verticale comprend également un logement de réception **204,** par exemple en forme de « C », la portion supérieure du logement de réception **204** comportant un ergot **206** faisant saillie en direction de la base. La base présente par ailleurs un évidement **207** apte à coopérer avec les moyens de verrouillage **304, 305** des profilés transversaux **300.**

Typiquement, l'évidement **207** peut s'étendre sur toute la longueur de la ridelle **200** et présenter une forme parallélépipédique, dont la largeur est supérieure ou égale à la longueur de la lame longiligne **305.** La portion débouchante de l'évidement **207** peut également présenter un rétrécissement **208** de largeur inférieure à la longueur de la lame longiligne **305.** De cette manière, la lame longiligne **305** peut pénétrer dans l'évidement **207** à travers le rétrécissement **208** lorsque sa longueur est orientée parallèlement à la ridelle **200.** En revanche, elle ne peut pas pénétrer dans l'évidement **207** à travers le rétrécissement **208** lorsque sa longueur est orientée perpendiculairement à la ridelle **200.** Corolairement, lorsque la lame longiligne **305** est localisée dans l'évidement **207,** si elle est orientée perpendiculairement à la ridelle **200,** elle est bloquée en translation vers le haut par le rétrécissement **208.**

Ainsi, afin de fixer la ridelle **200** sur les profilés transversaux **300,** la vis **304** peut être mise en rotation de sorte à faire tourner la lame longiligne **305** pour l'orienter parallèlement à la ridelle **200** afin de la faire pénétrer dans l'évidement **207.** A cet effet, ladite vis **304** est poussée vers le bas au moyen d'un tournevis ou d'une visseuse afin de libérer la lame longiligne **305,** puis est ensuite être tournée d'un quart de tour afin d'orienter la lame longiligne **305** perpendiculairement à la ridelle **200** et ainsi bloquer la lame longiligne **305** dans l'évidement **207.** De cette manière, la ridelle **200,** le profilé longitudinal **300** et le bouchon **320** sont maintenus ensembles par un unique moyen de fixation.

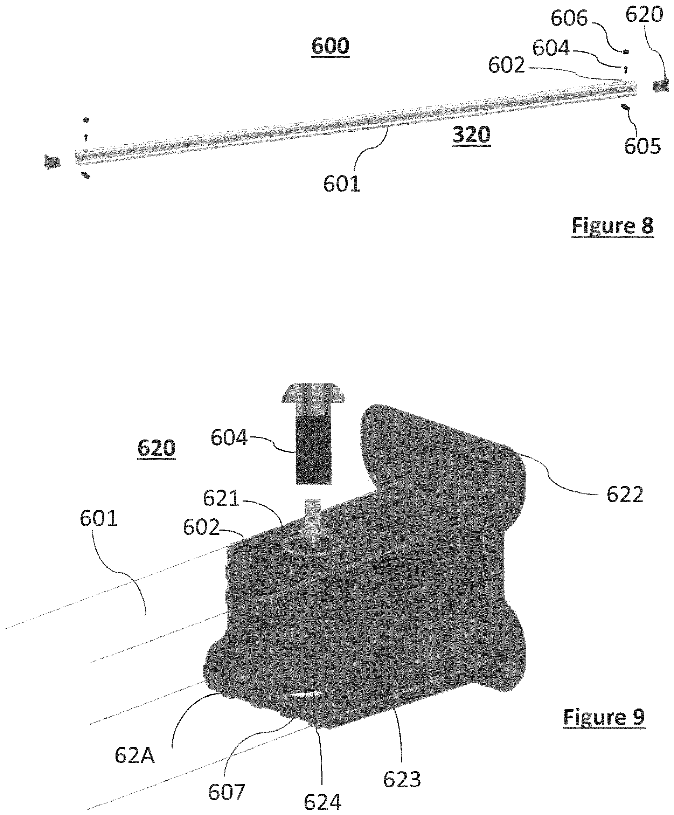

Tel qu'illustré sur les figures 8 à 10, le kit **1000** d'assemblage pour galerie de toit de l'invention peut en outre comprendre des profilés de plancher **600,** comprenant un corps **601** longiligne sensiblement parallélépipédique d'une longueur sensiblement identique à celle des profilés transversaux **300.** Le profilé de plancher **600** est de préférence réalisé en un matériau métallique résistant à la déformation et à la corrosion, typiquement en acier ou en aluminium. Le corps **601** est de préférablement creux, pour apporter plus de légèreté à la structure.

De préférence, le profilé de plancher **600** comporte des bouchons **620** en ses extrémités. Tel qu'illustré sur la figure 9, les bouchons **620** sont typiquement réalisé en une matière plastique ou caoutchouteuse moulée (par exemple en polyéthylène, polypropylène, polyuréthane, SEBS (polystyrène-b-poly(éthylène-butylène)-b-polystyrène), POM (polyoxyméthylène), etc.). Les bouchons **620** comportent un corps **623** creux destiné à être inséré en force aux extrémités du profilé de plancher **600.** Le corps **623** est surmonté d'une tête **622** plus large que le corps **623.** Typiquement, la tête **622** fait saillie du corps sur une hauteur comprise entre 1 et 10 millimètres.

La face externe des bouchons **620,** destinée à venir au contact des ridelles **200** et présente une épaisseur comprise entre 0.2 et 1 cm, plus fine que les bouchons **320** des profilés transversaux **300.**

Les bouchons **620** sont fixés sur le corps **601** du profilé de plancher **600** par des moyens de fixation incluant une vis **604** et une lame longiligne **605** ayant une fonction d'écrou, à l'instar de ce qui a été précédemment décrit en relation avec les profilés transversaux. A cet effet, la lame longiligne **605** comporte une ouverture filetée en son centre. De préférence, la lame longiligne **605** est de forme parallélépipédique avec une longueur supérieure à sa largeur.

Le corps **601** du profilé de plancher **600** peut comporter une ouverture traversante ou en variante, si le corps **601** du profilé de plancher **600** est creux, une première ouverture **602** débouchant sur la face supérieure du profilé de plancher **600** et alignée avec une seconde ouverture **607** débouchant sur la face inférieure du profilé de plancher **600** de sorte à permettre le passage de la vis **604** à travers le profilé de plancher **600.**

En outre, le corps **623** des bouchons **620** comporte également une ouverture traversante **621** permettant le passage de la vis **604.** En variante, si le corps **623** du bouchon **620** est creux, la face supérieure du corps **623** peut comporter une ouverture traversante ou un évidement **621** aligné avec une seconde ouverture **624** débouchant sur la face inférieure du bouchon **620.** Ainsi, lorsque le bouchon **620** est inséré dans le profilé, les ouvertures **602, 607, 621, 624** sont alignées pour permettre le passage de la vis **604.**

De préférence, le diamètre des ouvertures et/ou évidement **602, 607, 621, 624** est dimensionné de sorte à permettre le passage d'un outil tel qu'un tournevis ou une visseuse pour visser la vis **604** à travers les différents éléments.

En variante, le corps **601** et les bouchons peuvent être monobloc, c'est-à-dire que le corps **601** des profilés transversaux **600** peut être moulé de sorte à présenter en ses extrémités une forme similaire à celle des bouchons **620** et notamment une butée **625** en saillie.

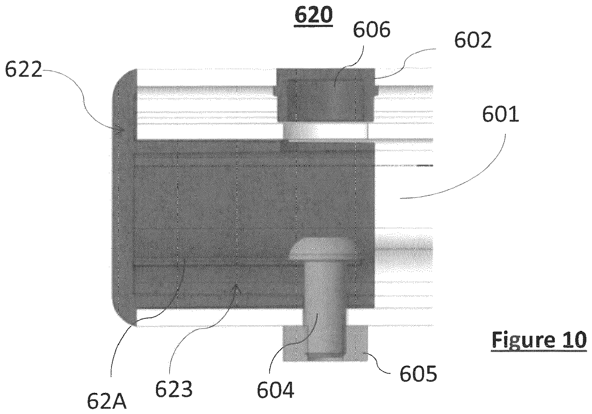

Tel qu'illustré sur la figure 10, l'ouverture **602** ménagée dans le profilé transversal **600** peut être bouchée par un cache **606** afin d'éviter que l'eau ne pénètre dans le profilé, causant ainsi un alourdissement de la structure.

Là encore, à l'instar de ce qui a été précédemment décrit en relation avec les profilés transversaux, le corps **623** du bouchon **620** comprend deux lames déformables **62A** s'étendant en direction de l'intérieur dudit corps, et destinées à recevoir la tête de vis **604,** de telle sorte à maintenir la lame longiligne **605** en pression contre la face inférieure du corps **623,** ainsi qu'on peut bien l'observer sur le figure 10. Ces lames latérales **62A** sont déformables, afin de permettre l'abaissement de de la vis **604** et corollairement de la lame longiligne **605** sous l'action de l'outil (tournevis ou visseuse) et ensuite, la rotation de ladite lame longiligne **605** d'un quart de tour, afin d'aboutir au verrouillage au sein de l'évidement **207** défini au voisinage de la base de la ridelle **200.** En d'autres termes, par défaut, c'est-à-dire en l'absence de contrainte extérieure, il existe un couple de contrainte verticale né de l'action de la vis **604** prenant appui sur les lames latérales déformables **62A** sur la lame longiligne **605** prenant appui contre la face inférieure du corps du bouchon. Le caractère déformable des lames latérales **62A** résulte de leur matériau constitutif, typiquement en matière plastique (polyamide, polyacetal, polypropylène, etc.), et de leur géométrie.

Ainsi, afin de fixer les profilés de plancher **600** sur la ridelle **200,** la vis **604** peut être mise en rotation sous l'action d'un tournevis ou d'une visseuse, de sorte en premier lieu à l'abaisser et corollairement libérer la lame longiligne de sa coopération avec la face inférieure du corps **620,** puis en second lieu à faire tourner la lame longiligne **605** pour l'orienter parallèlement à la ridelle **200** afin de la faire pénétrer dans l'évidement **207** de la ridelle **200.** La vis **604** peut ensuite être tournée d'un quart de tour afin d'orienter la lame longiligne **605** perpendiculairement à la ridelle **200** et ainsi bloquer la lame longiligne **605** dans l'évidement **207.** De cette manière, la ridelle **200,** le profilé de plancher **600** et le bouchon **620** sont maintenus ensembles par un unique moyen de fixation.

En outre, le kit **1000** peut inclure au moins un déflecteur **500** positionné à l'avant de la galerie. Ce déflecteur peut être métallique, issu d'une filière et monobloc avec une barre avant, fixée comme les profilés transversaux **300** et les profilés de plancher **600.** Dans cette configuration, l'ensemble est identique en tout point au profilé de plancher **600,** mais il intègre en outre un déflecteur. Cependant, ce mode de réalisation présente un inconvénient pour l'offre origine des constructeurs : l'angle du déflecteur est déterminé pour un véhicule considéré afin d'optimiser l'acoustique. En conséquence, le déflecteur est préférablement issu d'une tôle découpée et pliée avec des dimensions et des angles communs à tous les véhicules ou spécifique à un véhicule. Dans ce cas il est fixé à un profilé de plancher **600** avant, par au moins deux vis, traversant le profilé **600** et le déflecteur. Dans ces conditions, le profilé **600** est préférentiellement positionné le plus en avant possible, voir contre les bouchons de ridelle, pour optimiser l'acoustique et l'effet du déflecteur.

En outre, le kit **1000** peut également inclure d'autres accessoires non représentés, tels qu'une échelle permettant d'accéder à la galerie, des axes d'enroulement permettant par exemple d'enrouler une bâche, des stop charges et/ ou des sangles à enrouleur, ou encore un rouleau de chargement....

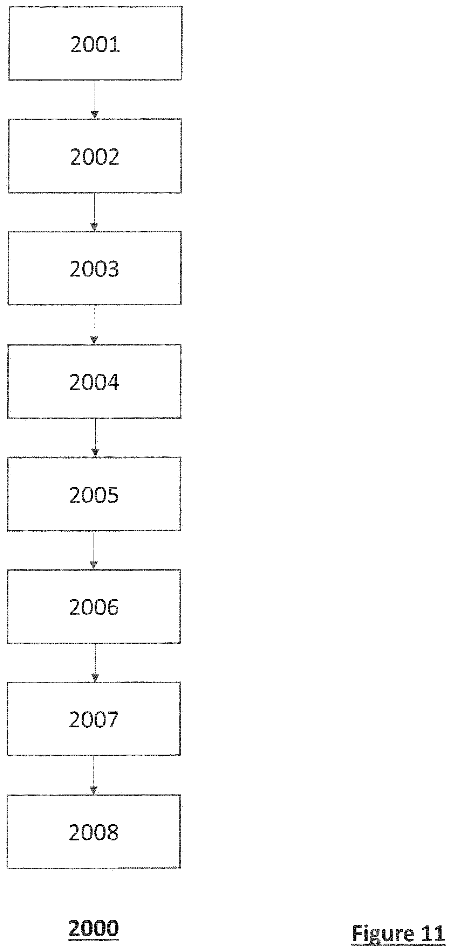

Tel qu'illustré sur les figures 11 à 17, l'invention porte en outre sur un procédé d'assemblage d'une galerie de toit de véhicule telle que décrite précédemment.

Tel qu'illustré sur la figure 11, le procédé **2000** peut éventuellement comporter une première étape **2001** d'assemblage des profilés transversaux **300** et des profilés de plancher **600,** tel qu'illustré sur les figures 2 et 8. En effet, le kit **1000** peut être fourni avec ces éléments sous forme de pièces détachées. Ainsi, la première étape **2001** d'assemblage peut consister à insérer les bouchons **320, 620** en force de part et d'autre des profilés **300, 600.**

Le procédé **2000** peut également comporter une seconde étape **2002** d'assemblage des ridelles **200.** En effet, pour faciliter le rangement et le stockage du kit **1000,** il peut être nécessaire de démonter les ridelles **200** pour en réduire la longueur. Ainsi, tel qu'illustré sur la figure 6, l'étape **2002** peut consister en l'insertion des deux sous-parties **201** et **202** sur la pièce de jonction **205** et à la fixation des sous-parties **201** et **202** sur la pièce de jonction **205** au moyen de vis.

En outre, l'étape **2002** peut également inclure le montage des caches **203** de part et d'autre de la ridelle **200.**

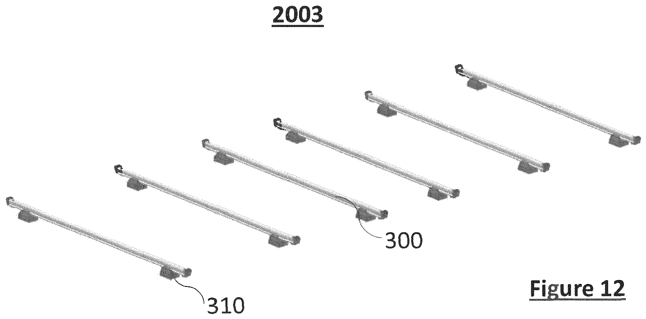

Tel qu'illustré sur la figure 12, l'étape **2003** du procédé **2000** consiste en la dépose des profilés transversaux **300** sur le toit du véhicule. Selon un premier mode de réalisation, les profilés transversaux **300** sont fixés sur le toit via les pieds d'appui **310.**

Pour ce faire, les pieds d'appui **310** sont alignés avec les logements prévus à cet effet ménagés sur le toit du véhicule.

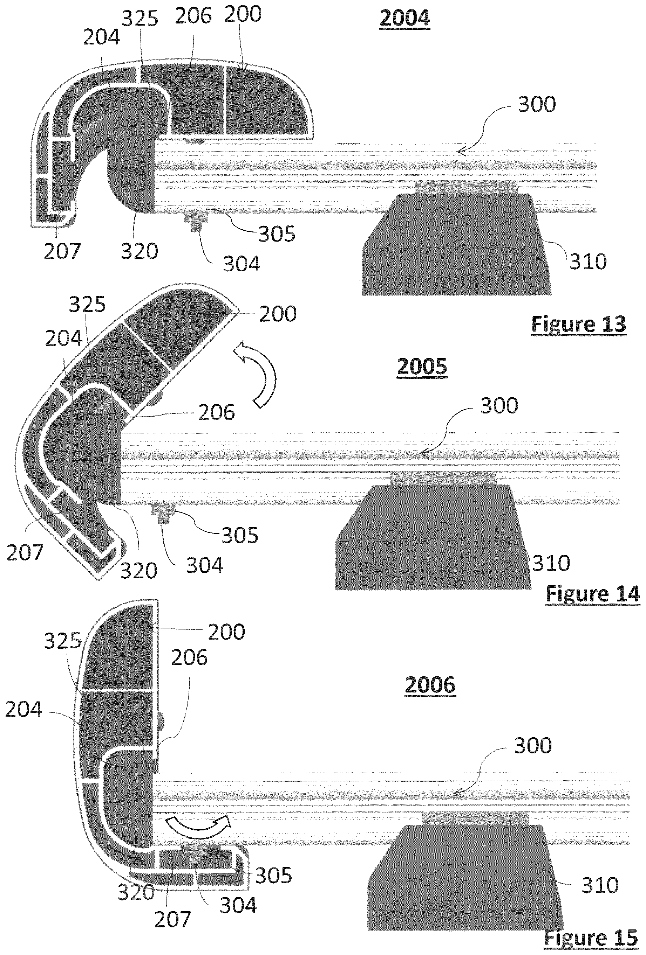

Tel qu'illustré sur la figure 13, l'étape **2004** consiste à positionner les ridelles **200** sur les profilés transversaux **300.** A cet effet, la partie verticale interne du « L » est positionnée contre la face supérieure du profilé transversal **300.** En particulier, l'ergot **206** de la ridelle **200** est positionné au contact de la butée **325** des profilés transversaux **300.** La coopération dudit ergot avec la butée permet en outre d'assurer l'alignement des profilés transversaux.

Tel qu'illustré sur la figure 14, l'étape **2005** consiste à initier un basculement de la ridelle **200** contre le bouchon **320** en maintenant l'ergot **206** contre la butée **325** jusqu'à pénétration du bouchon **320** dans le logement **204** de la ridelle **200.**

Tel qu'illustré sur la figure 15, l'étape **2006** consiste à solidariser la ridelle **200** sur les profilés transversaux **300** en exerçant tout d'abord une pression sur la tête de la vis **304** afin de libérer la lame longiligne **305,** puis en effectuant une rotation d'un quart de tout de la vis **304,** tel que décrit précédemment. La rotation de la vis **304** permet de faire tourner la lame longiligne **305** d'un quart de tour, celle-ci étant alors bloquée en translation verticale par un rétrécissement 208 de l'évidement **207** des ridelles **200.**

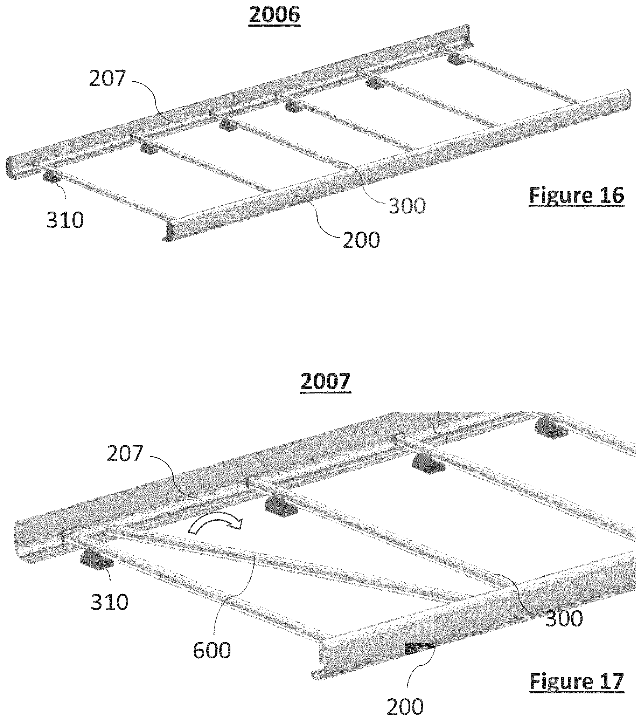

Tel qu'illustré sur la figure 16, le montage des ridelles **200** peut s'effectuer en simultané, par exemple par deux personnes en même temps ou l'une après l'autre, par exemple par une seule personne.

Tel qu'illustré sur la figure 17, l'étape **2007** consiste à fixer les profilés de plancher **600** sur la galerie de toit. Pour ce faire, les profilés de plancher **600** sont insérés en biais dans les logements **207** des ridelles **200.** Un mouvement de basculement permet d'aligner les profilés de plancher **600** avec les profilés transversaux **300.**

En outre, les profilés de plancher **600** peuvent être verrouillés sur les ridelles **200** en effectuant une rotation d'un quart de tout de la vis **604,** tel que décrit précédemment. La rotation de la vis **604** permettant de faire tourner la lame longiligne **605** d'un quart de tour, celle-ci étant alors bloquée en translation verticale part un rétrécissement **208** de l'évidement **207** des ridelles **200.** Avantageusement, l'étape **2007** consiste à fixer un déflecteur **500** à l'avant de la galerie.

Le démontage de la galerie peut être effectué en suivant le procédé inverse, chaque étape **2001-2007** du montage étant réversible.

Pour conclure, l'invention permet avantageusement d'obtenir une galerie de toit plus facile à stocker, transporter et surtout, plus facile à installer que les galeries existantes, notamment pour une personne seule, notamment en raison du mode de coopération des profilés transversaux avec les ridelles et de l'auto-stabilité résultant de ce mode de coopération.

## Revendications

1. Kit (1000) d'assemblage pour galerie de toit de véhicule comprenant :
• des profilés transversaux (300) munis de moyens d'appui ou de connexion (301) de la galerie au véhicule, les profilés transversaux (300) étant destinés à être montés sur le toit selon une direction transverse à un axe longitudinal du véhicule, et
• des ridelles (200), destinées à être montées aux extrémités des profilés transversaux (300) et orientées perpendiculairement par rapport à ces derniers, les ridelles (200) comportant un logement de réception (204) des extrémités des profilés transversaux (300),
les profilés transversaux (300) étant munis de moyens de verrouillage (304, 305) aptes à assurer la fixation des ridelles (200) au niveau des extrémités des profilés transversaux (300),
***caractérisé* en ce que** les profilés transversaux (300) sont munis d'une butée (325) en saillie supérieure, ladite butée étant positionnée en retrait par rapport à chacune des deux extrémités desdits profilés, et **en ce que** le logement de réception (204) dont sont munies les ridelles (200) comporte un ergot (206) en saillie orientée en direction de la base inférieure dudit logement de réception (204), ledit ergot (206) étant apte à coopérer avec la butée (325) en saillie supérieure des profilés transversaux (300).

2. Kit d'assemblage pour galerie de toit de véhicule selon la revendication 1, ***caractérisé* en ce que** les moyens de verrouillage (304, 305) sont réversibles et sont de type rapide.

3. Kit d'assemblage pour galerie de toit de véhicule selon l'une des revendications 1 et 2, ***caractérisé* en ce que** la base du logement de réception (204) dont sont munies les ridelles (200) définit un évidement (207) apte à coopérer avec les moyens de verrouillage (304, 305) des profilés transversaux (300).

4. Kit d'assemblage pour galerie de toit de véhicule selon l'une des revendications 1 à 3, ***caractérisé* en ce que** les moyens de verrouillage (304, 305) des profilés transversaux (300) sont constitués d'une lame longiligne (305), susceptible d'être actionnée selon un quart de tour par une vis (304).

5. Kit d'assemblage pour galerie de toit de véhicule selon la revendication 4, ***caractérisé* en ce que** la vis (304) est accessible par la partie supérieure du profilé transversal, muni à cet effet d'une ouverture traversante (302, 307).

6. Kit d'assemblage pour galerie de toit de véhicule selon l'une des revendications 1 à 5, ***caractérisé* en ce que** des bouchons (320) sont rapportés aux extrémités des profilés transversaux (300).

7. Kit d'assemblage pour galerie de toit de véhicule selon la revendication 6, ***caractérisé* en ce que** le logement de réception (204) des ridelles (200) est adapté à la forme des bouchons (320).

8. Kit d'assemblage pour galerie de toit de véhicule selon l'une des revendications 6 et 7, ***caractérisé* en ce que** la tête de vis (304) repose sur deux lames déformables (32A) émanant du corps (323) constitutif des bouchons (320), de telle sorte à maintenir la lame longiligne (305) en pression contre la face inférieure dudit corps (323).

9. Kit d'assemblage selon l'une des revendications 1 à 8, ***caractérisé* en ce qu'**il comprend en outre un déflecteur (500) positionné à l'avant de la galerie, ledit déflecteur (500) étant formé d'un profilé fixé en ses extrémités aux ridelles (200), ou alternativement ledit profilé étant monobloc.

10. Procédé (2000) de montage d'une galerie de toit de véhicule en forme de kit selon l'une des revendications 1 à 9, ***caractérisé* en ce qu'**il comporte les étapes suivantes :
• positionnement (2003) des profilés transversaux (300) sur le toit du véhicule,
• positionnement (2004) des ridelles (200) contre la face supérieure des profilés transversaux (300),
• basculement (2005) des ridelles (200) autour des extrémités des profilés transversaux (300) de sorte à permettre l'insertion des extrémités des profilés transversaux (300) dans le logement de réception (204) des ridelles (200), et
• fixation des ridelles (200) par les moyens de verrouillage (304, 305) des profilés transversaux (300).

11. Procédé (2000) de montage d'une galerie de toit de véhicule en forme de kit selon la revendication 10, ***caractérisé* en ce que** la fixation des ridelles par les moyens de verrouillage (304, 305) comporte les étapes suivantes :
- appui sur la tête de vis (304) par un outil approprié, apte à libérer la lame longiligne (305) ;
- rotation d'un quart de tour de ladite lame longiligne (305), par l'intermédiaire de la vis (304), de telle sorte à faire coopérer la lame longiligne (305) avec l'évidement (207) dont est munie la ridelle (200) ;
- verrouillage de la lame longiligne au sein de l'évidement (207).

## Patentansprüche

1. Montagekit (1000) für Fahrzeugdachträger, umfassend:
• Querprofile (300) mit Mitteln zum Aufsetzen oder Verbinden (301) des Dachgepäckträgers mit dem Fahrzeug, wobei die Querprofile (300) auf dem Dach in einer Richtung quer zur Längsachse des Fahrzeugs zu montieren sind, und
• Seitenteile (200), die an den Enden der Querprofile (300) zu montieren und senkrecht zu diesen auszurichten sind, wobei die Seitenteile (200) eine Aussparung zur Aufnahme (204) der Enden der Querprofile (300) umfassen,
wobei die Querprofile (300) mit Verriegelungsmitteln (304, 305) versehen sind, die in der Lage sind, die Befestigung der Seitenteile (200) an den Enden der Querprofile (300) sicherzustellen,
***dadurch gekennzeichnet,* dass** die Querprofile (300) mit einem oben vorstehenden Anschlag (325) versehen sind, wobei der Anschlag in Bezug auf jedes der beiden Enden der Profile zurückversetzt positioniert ist, und dass die Aufnahmeaussparung (204), mit der die Seitenteile (200) versehen sind, eine vorstehende Nase (206) umfasst, die zur unteren Basis der Aufnahmeaussparung (204) hin ausgerichtet ist, wobei die Nase (206) in der Lage ist, mit dem oben vorstehenden Anschlag (325) der Querprofile (300) zusammenzuwirken.

2. Montagekit für Fahrzeugdachträger nach Anspruch 1, ***dadurch gekennzeichnet,* dass** die Verriegelungsmittel (304, 305) lösbar und vom Typ Schnellverschluss sind.

3. Montagekit für Fahrzeugdachträger nach einem der Ansprüche 1 und 2, ***dadurch gekennzeichnet,* dass** die Basis der Aufnahmeaussparung (204), mit der die Seitenteile (200) versehen sind, eine Ausnehmung (207) definiert, die in der Lage ist, mit den Verriegelungsmitteln (304, 305) der Querprofile (300) zusammenzuwirken.

4. Montagekit für Fahrzeugdachträger nach einem der Ansprüche 1 bis 3, ***dadurch gekennzeichnet,* dass** die Verriegelungsmittel (304, 305) der Querprofile (300) aus einer länglichen Lamelle (305) bestehen, die um eine Vierteldrehung durch eine Schraube (304) bewegt werden kann.

5. Montagekit für Fahrzeugdachträger nach Anspruch 4, ***dadurch gekennzeichnet,* dass** die Schraube (304) über den oberen Teil des Querprofils zugänglich ist, welches zu diesem Zweck mit einer Durchgangsöffnung (302, 307) versehen ist.

6. Montagekit für Fahrzeugdachträger nach einem der Ansprüche 1 bis 5, ***dadurch gekennzeichnet,* dass** an den Enden der Querprofile (300) Stopfen (320) aufgesetzt sind.

7. Montagekit für Fahrzeugdachträger nach Anspruch 6, ***dadurch gekennzeichnet,* dass** die Aufnahmeaussparung (204) der Seitenteile (200) der Form der Stopfen (320) angepasst ist.

8. Montagekit für Fahrzeugdachträger nach einem der Ansprüche 6 und 7, ***dadurch gekennzeichnet,* dass** der Schraubenkopf (304) an zwei verformbaren Lamellen (32A) anliegt, die von dem die Stopfen (320) bildenden Körper (323) ausgehen, so dass die längliche Lamelle (305) gegen die Unterseite des Körpers (323) gedrückt gehalten bleibt.

9. Montagekit für Fahrzeugdachträger nach einem der Ansprüche 1 bis 8, ***dadurch gekennzeichnet,* dass** es außerdem ein Ablenkblech (500) umfasst, das an der Vorderseite des Dachgepäckträgers positioniert ist, wobei das Ablenkblech (500) aus einem Profil gebildet wird, das an seinen Enden an den Seitenteilen (200) befestigt wird, oder wobei alternativ das Profil aus einem Stück gebildet wird.

10. Verfahren (2000) zur Montage eines Fahrzeugdachträgers in Form eines Kits nach einem der Ansprüche 1 bis 9, **dadurch gekennzeichnet, dass** es die folgenden Schritte umfasst:
• Positionierung (2003) der Querprofile (300) auf dem Fahrzeugdach,
• Positionierung (2004) der Seitenteile (200) gegen die Oberseite der Querprofile (300),
• Kippen (2005) der Seitenteile (200) um die Enden der Querprofile (300), so dass die Enden der Querprofile (300) in die Aufnahmeaussparung (204) der Seitenteile (200) eingeführt werden können, und
• Befestigung der Seitenteile (200) durch die Verriegelungsmittel (304, 305) der Querprofile (300).

11. Verfahren (2000) zur Montage eines Fahrzeugdachträgers in Form eines Kits nach Anspruch 10, ***dadurch gekennzeichnet,* dass** die Befestigung der Seitenteile durch die Verriegelungsmittel (304, 305) die folgenden Schritte umfasst:
- Druck auf den Kopf der Schraube (304) durch ein geeignetes Werkzeug, das in der Lage ist, die längliche Lamelle (305) freizusetzen;
- Drehen der länglichen Lamelle (305) um eine Vierteldrehung mittels der Schraube (304), so dass die längliche Lamelle (305) mit der Ausnehmung (207) in dem Seitenteil (200) zusammenwirkt;
- Verriegelung der länglichen Lamelle innerhalb der Ausnehmung (207).

## Claims

1. Assembly kit (1000) for a vehicle roof basket carrier comprising:
• transverse profiles (300) provided with means (301) for pressing or connecting the roof basket carrier to the vehicle, the transverse profiles (300) being intended to be mounted on the roof along a direction transverse to a longitudinal axis of the vehicle, and
• sideboards (200), intended to be mounted at the ends of the transverse profiles (300) and oriented perpendicularly with respect to the latter, the sideboards (200) comprising a housing (204) for receiving the ends of the transverse profiles (300),
the transverse profiles (300) being provided with locking means (304, 305) capable of securing the sideboards (200) at the ends of the transverse profiles (300),
***characterised* in that** the transverse profiles (300) are provided with an upper projecting abutment (325), said abutment being positioned set back with respect to each of the two ends of said profiles, and **in that** the receiving housing (204) with which the sideboards (200) are provided comprises a projecting lug (206) oriented towards the lower base of said receiving housing (204), said lug (206) being able to cooperate with the upper projecting abutment (325) of the transverse profiles (300).

2. Assembly kit for a vehicle roof basket carrier according to claim 1, ***characterised* in that** the locking means (304, 305) are reversible and are of the quick type.

3. Assembly kit for a vehicle roof basket carrier according to any one of claims 1 and 2, ***characterised* in that** the base of the reception housing (204) with which the sideboards (200) are provided defines a recess (207) capable of cooperating with the locking means (304, 305) of the transverse profiles (300).

4. Assembly kit for a vehicle roof basket carrier according to any one of claims 1 to 3, ***characterised* in that** the locking means (304, 305) of the transverse profiles (300) consist of an elongate blade (305) which can be actuated by a screw (304) in a quarter-turn.

5. Assembly kit for a vehicle roof basket carrier according to claim 4, ***characterised* in that** the screw (304) is accessible via the upper part of the transverse profile, provided for this purpose with a through opening (302, 307).

6. Assembly kit for a vehicle roof basket carrier according to any one of claims 1 to 5, ***characterised* in that** plugs (320) are attached to the ends of the transverse profiles (300).

7. Assembly kit for a vehicle roof basket carrier according to claim 6, ***characterised* in that** the receiving housing (204) of the sideboards (200) is adapted to the shape of the plugs (320).

8. Assembly kit for a vehicle roof basket carrier according to any one of claims 6 and 7, ***characterised* in that** the screw head (304) rests on two deformable blades (32A) emerging from the body (323) constituting the plugs (320), so as to keep the elongate blade (305) pressed against the lower face of said body (323).

9. Assembly kit for a vehicle roof basket carrier according to any one of claims 1 to 8, ***characterised* in that** it further comprises a deflector (500) positioned at the front of the roof basket carrier, said deflector (500) being formed by a profile fixed at its ends to the sideboards (200), or alternatively said profile being in one piece.

10. Method (2000) for mounting a kit-shaped vehicle roof basket carrier according to any one of claims 1 to 9, ***characterised* in that** it comprises the following steps:
• positioning (2003) of the transverse profiles (300) on the roof of the vehicle,
• positioning (2004) the sideboards (200) against the upper face of the transverse profiles (300),
• tilting (2005) the sideboards (200) around the ends of the transverse profiles (300) so as to allow insertion of the ends of the transverse profiles (300) into the housing (204) for receiving the sideboards (200), and
• fixing the sideboards (200) by means of the locking means (304, 305) of the transverse profiles (300).

11. Method (2000) for mounting a kit-shaped vehicle roof basket carrier according to claim 10, ***characterised* in that** the fixing of the sideboards by means of the locking means (304, 305) comprises the following steps:
- pressing on the screw head (304) by a suitable tool, capable of releasing the elongate blade (305);
- rotating said elongate blade (305) by a quarter of a turn, via the screw (304), so as to cause the elongate blade (305) to engage with the recess (207) with which the sideboard (200) is provided;
- locking the elongate blade within the recess (207).
